Europäisches Patentamt

European Patent Office

Office européen des brevets

(11) Veröffentlichungsnummer: **0 512 581 A2**

# EUROPÄISCHE PATENTANMELDUNG

(21) Anmeldenummer: **92112087.9**

(22) Anmeldetag: **18.01.90**

(51) Int. Cl.5: **D01G 27/00**, B65G 37/00

Diese Anmeldung is am 15 - 07 - 1992 als Teilanmeldung zu der unter INID-Kode 60 erwähnten Anmeldung eingereicht worden.

(30) Priorität: **08.02.89 CH 431/89**

(43) Veröffentlichungstag der Anmeldung:
**11.11.92 Patentblatt 92/46**

(60) Veröffentlichungsnummer der früheren Anmeldung nach Art. 76 EPÜ: **0 381 960**

(84) Benannte Vertragsstaaten:
**CH DE ES FR IT LI**

(71) Anmelder: **MASCHINENFABRIK RIETER AG**

**CH-8406 Winterthur(CH)**

(72) Erfinder: **Scheurer, Paul**
**Bollenstrasse 5**
**CH-8450 Andelfingen(CH)**

(54) **Transporteinrichtung.**

(57) Die Erfindung bezieht sich auf eine Vorrichtung, bzw. auf ein Verfahren zum gruppenweisen Transport von Wickeln (4) oder leeren Wickelhülsen zwischen wickelbildenden und wickelverarbeitenden Maschinen (1,2;16-25) über eine mit einem Antrieb versehene Verschiebebrücke (9).

Es sind derartige Systeme bekannt, wobei die Nachführung von Reservewickeln erst nach einem Signal "Wickel ausgelaufen" vorgenommen wird.

Es wird deshalb ein Verfahren bzw. eine Vorrichtung vorgeschlagen, wobei die Positionierung der Verschiebebrücke (9) über einen Leitrechner (26) gesteuert wird, welcher mit den wickelverarbeitenden und wickelbildenden Maschinen (1,2;16-25) sowie mit der Verschiebebrücke (9) in Verbindung steht.

Fig.1

Die Erfindung bezieht sich auf eine Vorrichtung zum gruppenweisen Transport von Wickeln oder leeren Wickelhülsen nach dem Oberbegriff des Hauptanspruches.

Zum Transport von Wattewickeln oder leeren Hülsen in der Kämmerei einer Spinnereianlage sind unterschiedliche Systeme bekannt, wobei die Wattewickel einzeln oder in Gruppen über Förderanlagen an die benötigten Stellen überführt werden. So zeigt z.B. der Zinser "Lap-Lifter 890" ein Transportsystem mittels eines Portalkrans, wobei einzelne, von einer Wickelmaschine abgegebene Wattewickel, an nachfolgende Kämmmaschienen abgegeben werden. Man spricht in diesem Fall von einem "wilden Wechsel". Wie aus dem Prospekt der Firma Zinser "Super-Lap 810" zu entnehmen, versorgt eine wattewickelbildende Maschine mehrere nachfolgende Kämmaschinen.

Diese bekannten Fördereinrichtungen werden über relativ starre und feste Melde- und Befehlsvorgaben gesteuert. Dadurch kann es vorkommen, dass bei einzelnen Kämmaschinen nicht rechtzeitig die Reservewickel zur Verfügung stehen, was somit einen längeren und unerwünschten Stillstand der betreffenden Kämmaschine hervorruft.

Die Erfindung stellt sich somit die Aufgabe, die genannten Nachteile zu beseitigen und die Transporteinrichtung derart auszubilden, dass eine rechtzeitige Nachführung der benötigten Ersatz-Wattewickel an den Kämmaschinen erfolgt.

Diese Aufgabe wird dadurch gelöst, dass die Verschiebung bzw. Positionierung der Verschiebebrücke mittels einer Positionssensorik über einen Leitrechner entsprechend des mittels Sensoren ermittelten Wickelbedarfs gesteuert wird, und der Leitrechner mit den wickelverarbeitenden und wickelbildenden Maschinen, welche die Anzahl einer in Bereitschaft stehenden Gruppe von Wattewickeln melden, sowie mit dem Antrieb der Verschiebebrücke in Verbindung steht.

Durch diese Verknüpfung, über einen Leitrechner, von Transportsystem und den wickelbildenden und wickelverarbeitenden Maschinen ist es möglich, eine fortlaufende Überwachung der Wickelverarbeitung und Wickelbildung zu gewährleisten, wobei das Transportsystem, bzw. die Verschiebebrükke, über den Leitrechner unter Zuhilfenahme einer Positionssensorik logisch positioniert werden kann. Das heisst, die Verschiebebrücke wird über den Leitrechner genau an die Stelle positioniert, wo sie zeitlich ihre nächste Transport- bzw. Übergabe- oder Abgabefunktion ausführen muss.

Es ist vorteilhaft, den wickelbildenden Maschinen mindestens einen Puffersektor für eine vorgegebene Anzahl von Wickeln zuzuordnen. Dadurch kann jederzeit, selbst wenn momentan noch keine Reservewickel benötigt werden, eine den Kämmköpfen der Kämmaschinen bestimmte Zahl von Wickeln durch die Verschiebebrücke in eine Wartestellung an die Kämmaschine überführt werden, welche entsprechend der Meldung an den Leitrechner als zeitlich nächste Maschine die Nachführung von Reservewickeln benötigt.

Die Anbringung einer weiteren Pufferzone für die leeren Wickelhülsen an den wickelbildenden Maschinen erhöht die Flexibilität der Verschiebebrücke, da die Rückführung und Abgabe der leeren Wickelhülsen an die wickelbildenden Maschinen gewährleistet ist und somit die Verschiebebrücke wieder frei macht für weitere Transportaufgaben.

Die Verbindung der Pufferzonen und der Sensoren zur direkten Wickelüberwachung mit dem Leitrechner ermöglicht eine exakte, zeitlich abgestimmte Steuerung. Sind mehrere wickelbildende Maschinen mit wickelverarbeitenden Maschinen in einem Verbundsystem, so ist es von Vorteil, den Leitrechner mit einer Eingabeeinheit zur manuellen Eingabe bestimmter Vorgabewerte zu verbinden. Dies ist insbesondere wichtig, wenn mit unterschiedlichen Mischungen der Wattewickel gearbeitet wird.

Weitere Vorteile der Erfindung sind anhand eines nachfolgenden Ausführungsbeispieles näher beschrieben und aufgezeigt:
Es zeigt:

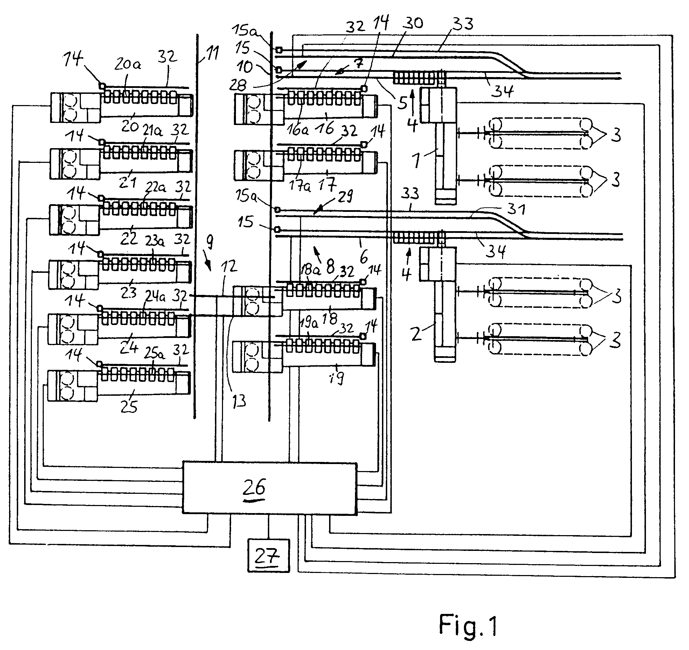

Figur 1 eine schematische Draufsicht auf ein erfindungsgemäss verbundenes Transportsystem.

Die Figur 1 zeigt zwei Wattendoubliermaschinen 1, 2, welche die aus Kannen 3 abgezogenen Faserbänder doublieren, verstrecken und die dabei gebildete Watte auf eine Hülse aufwickeln. Die so entstandenen Wattewickel 4 werden über nicht näher aufgezeigte Greifer erfasst, über welche die Wickel über Führungsschienen 5, 6 zu einer Pufferstation von 7, 8 überführt werden. Die Verschiebung der Wickel nehmen die Läufer 15 vor, welche auf parallel zu den Führungsschienen 5,6 angeordnete Leitschienen 34 verschiebbar gelagert sind. Diese Pufferstationen 7, 8 stellen gleichzeitig eine Abgabestation für eine nachfolgende Transporteinrichtung dar.

Diese Transporteinrichtung besteht aus einer Verschiebebrücke 9, welche auf den Schienen 10, 11 geführt wird. Die Verschiebebrücke 9 weist einen nicht näher aufgezeigten Fahrantrieb auf. Ausserdem ist die Verschiebebrücke 9 mit zwei Aufnahmeschienen 12, 13 versehen.

Den zwei Wattendoubliermaschinen 1, 2 sind im gezeigten Beispiel zehn Kämmaschinen 16 bis 25 nachgeschaltet, bei welchen die Wattewickel 4 abgerollt, ausgekämmt und nach einem Streckvorgang zu einem Faserband geformt werden. In Verlängerung zu den Aufnahmeschienen 12, 13 der Verschiebebrücke 9, sind die Kämmaschinen 16 bis 25 jeweils mit Schienen 16a bis 25a zur Aufnahme von Wattenwickel 4 oder zur Abgabe von leeren Hülsen ausgestattet. Parallel zu den Schienen 16a bis 25a ist jeweils eine Leitschiene 32 befestigt, welche mit einem Läufer 14 zur Verschiebung der Wattewickel, bzw. der leeren Hülsen, versehen sind.

Sämtliche Wattendoubliermaschinen 1, 2 sowie die Kämmmaschinen 16 bis 25 sind über eine Leitung mit einem Leitrechner 26 verbunden. Gleichzeitig besteht eine Verbindung des Leitrechners zu den Antriebselementen der Verschiebebrücke 9. Parallel zu den Führungsschienen 5, 6 der Wattendoubliermaschinen 1, 2 sind Aufnahmeschienen 30, 31 zur Aufnahme und Rückführung der leeren Hülsen vorgesehen. Diese Aufnahmeschienen 30, 31 weisen eine derartige Länge auf, so dass sie als Leerhülsenpuffer 28, 29 dienen können. Zu den Aufnahmeschienen 30, 31 sind parallel Leitschienen 33 montiert, auf welchen jeweils ein Läufer 15a verschiebbar gelagert ist. Die Läufer 15a sind vorgesehen, um die Leerhülsengruppe von der Aufnahmeschiene 12 oder 13 der Verschiebebrücke 9 abzuziehen und für den Weitertransport auf den Aufnahmeschienen 30, 31 und letztendlich zurück zu den Wattendoubliermaschinen 1, 2.

Die Pufferstationen 7, 8, 28, 29 stehen über nicht näher aufgezeigte Sensoren ebenfalls mit dem Leitrechner 26 in Verbindung.

Dem Leitrechner 26 ist ein Schaltpult 27 vorgeschaltet, über welchen der Leitrechner 26 entsprechend eingestellt oder manuell übersteuert werden kann.

Werden z.B. auf den Wattendoubliermaschinen 1, 2 zwei unterschiedliche Mischungen verarbeitet, so können nur die dafür vorgesehenen Kämmaschinen mit ein und derselben Mischung beschickt werden.

Auf jeder Kämmaschine 16 bis 25 sind entsprechende Sensoren angebracht, welche die laufende Überwachung des Wickeldurchmessers vornehmen und entsprechende Signale an den Leitrechner 26 abgeben. Diese Signale werden im Leitrechner 26 gespeichert, wobei dieser den Zeitpunkt errechnet, zu welchem spätestens eine Gruppe von Reservewickeln bereitgehalten werden muss.

Ähnlich läuft auch der Vorgang bei den Wattendoubliermaschinen 1, 2 ab, wobei über Sensoren einerseits das Vorhandensein einer vollständigen Gruppe von Wattewickeln dem Leitrechner anzeigt und andererseits die Aufnahmebereitschaft der Leerhülsenpuffer 28, 29 signalisiert. Die Stellung der Position der Verschiebebrücke 9 auf den Schienen 10, 11 wird gleichfalls fortwährend dem Leitrechner 26 übermittelt. Mit den vorliegenden Daten ist es möglich, über den Leitrechner 26 unter Berücksichtigung sämtlicher Betriebszustände an den einzelnen Maschinen und unter Beachtung eventuell unterschiedlich zu verarbeitenden Mischungen den Transport der Wattewickel 4 zu den Kämmaschinen 16 bis 25 über eine logisch gesteuerte Verschiebebrücke 9 exakt und ohne Zeitverlust vorzunehmen. Ebenso erfolgt die Rückführung der an den Kämmaschinen abgegebenen Leerhülsen, wobei die Leerhülsen über die Aufnahmeschienen 12 und die Wattewickel über die Aufnahmeschine 13 überführt werden. Die Verschiebung einer Gruppe von Greifern, welche die Wattenwickel oder die leeren Hülsen festhalten, erfolgt durch die Läufer 14 oder 15, 15a.

Die Läufer 14, 15 und 15a können mit einem gesteuerten Eigenantrieb versehen sein, wobei die Steuerung ebenfalls vom Leitrechner 26 aus erfolgen kann.

Es können auch andere bekannte Verschiebeelemente an Stelle der im Beispiel aufgezeigten Läufer vorgesehen sein.

**Patentansprüche**

1. Vorrichtung zum gruppenweisen Transport von Wickeln (4) oder leeren Wickelhülsen zwischen mindestens einer wickelbildenden Maschine (1,2) und einer Mehrzahl von wickelverarbeitenden Maschinen (16-25) über eine mit einem Antrieb versehene Verschiebebrücke (9), die quer zu den Einspeislinien der wickelverarbeitenden Maschinen verschiebbar ist,
dadurch gekennzeichnet, dass die Verschiebung und Positionierung der Verschiebebrücke mittels einer Positionssensorik über einen Leitrechner (26) entsprechend dem mittels Sensoren ermittelten Wickelbedarf gesteuert wird, und der Leitrechner mit den wickelverarbeitenden Maschinen (16-25) und den wickelbildenden Maschinen (1,2), welche über Sensoren die Anzahl einer in Bereitschaft stehenden Gruppe von Wattewickeln melden, sowie mit dem Antrieb der Verschiebebrücke (9) in Verbindung steht.

2. Vorrichtung nach Anspruch 1, dadurch gekennzeichnet, dass die Einspeislinien (5,6) der wickelbildenden Maschinen (1,2) mindestens einen Puffersektor (7,8) für eine vorgegebene Anzahl von Wickeln (4) aufweist.

3. Vorrichtung nach Anspruch 2, dadurch gekennzeichnet, dass die wickelbildenden Maschinen (1,2) mit einer weiteren Einspeislinie (30,31) zur Aufnahme der Wickelhülsen versehen sind, deren Länge mindestens die Aufnahme einer vorgegebenen Anzahl von Hülsen ermöglicht.

4. Vorrichtung nach Anspruch 2 oder 3, dadurch gekennzeichnet, dass der Puffersektor (7,8) mit einem mit dem Leitrechner (26) verbundenen Sensor verbunden ist.

5. Vorrichtung nach Anspruch 1, dadurch gekennzeichnet, dass der Leitrechner (26) mit einer Eingabeeinheit (27) zur manuellen Eingabe bestimmter Vorgabewerte verbunden ist.

6. Vorrichtung nach Anspruch 1, dadurch gekennzeichnet, dass die Verschiebebrücke (9) mit einer Einrichtung zur Positionserfassung versehen ist, welche mit dem Leitrechner (26) in Verbindung steht.

7. Vorrichtung nach Anspruch 1, dadurch gekennzeichnet, dass die Verschiebebrücke (9) mit zwei Aufnahmeschienen (12,13) versehen ist.

8. Verfahren zum automatischen Transport von Wickeln (4) oder leeren Wickelhülsen zwischen mindestens einer wickelbildenden Maschine (1,2) und einer Mehrzahl von wickelverarbeitenden Maschinen (16-25) über eine mit einem Antrieb versehene Verschiebebrücke (9), die quer zu den Einspeislinien der wickelverarbeitenden Maschinen verschiebbar ist,
dadurch gekennzeichnet, dass die Verschiebung und Positionierung der Verschiebebrücke (9) bzw. der Wickel (4) oder Hülsen entsprechend dem zeitlichen Wickelbedarf der wickelverarbeitenden Maschinen über einen Leitrechner (26) gesteuert wird, und der Leitrechner das entsprechende Steuersignal unter Berücksichtigung der folgenden ihm übermittelten Signale errechnet:
a) Position der Verschiebebrücke (9)
b) Anzahl der bereitgestellten Wickel (4) einer Pufferstation (7,8) der wickelbildenden Maschinen
c) Zeitpunkt des letzten Wickelwechsels an den wickelverarbeitenden Maschinen (16-25)
d) Sortiment der Mischung des Wickelmaterials
e) Momentane Wickelgrösse an der wickelverarbeitenden Maschine (16-25).

9. Verfahren nach Anspruch 8, dadurch gekennzeichnet, dass der Leitrechner (26) manuell anwählbar ist.

10. Verfahren, nach Anspruch 8, dadurch gekennzeichnet, dass die Steuerung des Leitrechners (26) manuell übersteuerbar ist.

Fig.1